# EUROPÄISCHE PATENTSCHRIFT

(11) **EP 1 539 526 B1**
(45) Veröffentlichungstag und Bekanntmachung des Hinweises auf die Patenterteilung: **02.11.2006**
(21) Anmeldenummer: 03748034.0
(22) Anmeldetag: 16.09.2003
(51) Int. Cl.: B60W 10/04

(54) **VERFAHREN UND VORRICHTUNG ZUR AKTIVEN REDUZIERUNG VON KUPPLUNGSRUPFEN IN EINEM KRAFTFAHRZEUG**
METHOD AND DEVICE FOR ACTIVELY REDUCING CLUTCH GRABBINGS IN A MOTOR VEHICLE
PROCEDE ET DISPOSITIF DE REDUCTION ACTIVE DE PHENOMENES DE BROUTAGE D'EMBRAYAGE DANS UNE AUTOMOBILE

(30) Priorität: 21.09.2002 DE 10244026
(43) Veröffentlichungstag der Anmeldung: 15.06.2005
(73) Patentinhaber: ZF FRIEDRICHSHAFEN AG, 88038 Friedrichshafen (DE)
(72) Erfinder: WINKEL, Matthias, 88250 Weingarten (DE); JÄGER, Thomas, 88074 Meckenbeuren (DE); KRAMER, Rupert, 88048 Friedrichshafen (DE); AEPKER, Horst, 88085 Langenargen (DE)
(86) Internationale Anmeldenummer: PCT/EP2003/010276
(87) Internationale Veröffentlichungsnummer: WO 2004/028849

(56) Entgegenhaltungen:
- WO-A-01/56827
- DE-A- 10 041 387
- DE-A- 19 532 163
- DE-A- 19 538 784
- FR-A- 2 598 765
- GB-A- 2 346 351
- US-A- 4 343 387
- US-A- 4 656 883
- US-A- 5 964 509
- US-A- 6 050 652
- US-B1- 6 314 342

## Beschreibung

In Kraftfahrzeugen können während der Schlupfphase einer Kupplung im Antriebsstrang Schwingungen auftreten, die in der Fahrzeugkupplung erzeugt werden. Wie dem Fachartikel "Prüfen von Antriebssträngen am Beispiel des Kupplungsrupfens - Ganzheitliche Antriebsstrangentwicklung", ATZ Automobiltechnische Zeitschrift 103 (2001) Seite 44 ff. entnommen werden kann, entstehen diese Schwingungen, wenn bei einer schlupfenden Kupplung periodische Drehmomente erzeugt werden, die im Eigenfrequenzbereich des durch die Kupplung dynamisch getrennten Antriebsstranges liegen.

Diese auch als sogenanntes Kupplungsrupfen bekannten Schwingungen können selbst- oder zwangserregt sein. Selbsterregtes Kupplungsrupfen wird durch ein Abfallen des Kupplungsbelagreibwertes gegenüber der Gleitgeschwindigkeit verursacht und kann in Abhängigkeit von der Antriebsstranggesamtdämpfung durchaus erheblich sein.

Zwangserregtes Kupplungsrupfen wird dagegen durch in Bezug auf die Reibpartner äußere Quellen angeregt, zu denen beispielsweise Kurbelwellenaxialschwingungen oder Parallelitätsabweichungen an der Kupplungsdruckplatte in Kombination mit einem Winkelversatz zwischen der Kupplungsdruckplatte und der den Reibbelag tragenden Kupplungsscheibe gehören können.

Die beim Kupplungsrupfen entstehenden Drehschwingungen im Antriebsstrang werden von den angetriebenen Fahrzeugrädern in Längsschwingungen des Gesamtfahrzeugs umgewandelt und über die Bedienelemente sowie über die Fahrzeugsitze an die Fahrzeuginsassen übertragen. Das Kupplungsrupfen wird dabei von den Fahrzeuginsassen als unangenehme Vibrationen oder Schwingungen wahrgenommen, die auch mit einer Geräuschbelastung verbunden sein können.

Zwar reduziert eine hohe Dämpfung in den Komponenten des Antriebsstranges die Schwingungsamplituden beim zwangserregten Kupplungsrupfen, diese ist jedoch wegen des allgemeinen Wunsches nach einem möglichst geringen Kraftstoffverbrauch eines Kraftfahrzeuges oft eine unrealistische Forderung, da eine permanent hohe Dämpfung im Antriebsstrang im wesentlichen nur durch eine ständig wirkende Anhebung der Reibverluste, beispielsweise im Getriebe, in den Lagern und in den Dichtungen erreichbar ist.

Als Gegenmaßnahmen zur Reduzierung des Kupplungsrupfens und der damit einher gehenden störenden Fahrzeuglängsschwingungen wurde beispielsweise vorgeschlagen, einen Kupplungsreibbelag mit steigendem Reibwertverlauf über die Gleitgeschwindigkeit einzusetzen. Die derzeit verfügbaren Reibbeläge weisen aber kein solches Verhalten auf.

Eine weitere Möglichkeit zur Reduzierung des Kupplungsrupfens besteht darin, die Fertigungstoleranzen im Bereich der Kupplung weiter zu reduzieren, was jedoch einerseits nur mit einem sehr viel höheren Fertigungsaufwand möglich ist und andererseits einen eher bescheidenen Beitrag zur Reduzierung des Kupplungsrupfens bringt ("Rupfen-Ursachen und Abhilfen", Prof. Dr. Ing. Albert Albers, Dipl. Ing. Daniel Herbst, in: 6. LuK-Kolloquium, 1998).

Zudem ist es aus der EP 845 616 A2 bekannt, bei einer Anfahrkupplung oder einer Wandlerüberbrückungskupplung ein Kupplungsruckeln mittels geeigneter Sensoren und einer Steuerungs- und Regelungsvorrichtung messtechnisch zu erfassen sowie aktive Maßnahmen zum Beenden dieses Kupplungsruckeln vorsehen. Diese Maßnahmen bestehen darin, den Zündzeitpunkt einer mit der Kupplung antriebstechnisch verbundenen Brennkraftmaschine zu ändern, um so auf das Eingangsdrehmoment in die Kupplung einzuwirken. Eine andere Maßnahme sieht vor, den Anpressdruck der Kupplungsdruckplatte auf den Kupplungsreibbelag zu erhöhen, wodurch ein manche Vorteile bietender Schlupfbetrieb der Kupplung nicht mehr möglich ist.

Da die bekannten Maßnahmen nur unbefriedigende Ergebnisse hinsichtlich der Vermeidung oder Reduzierung des Kupplungsrupfens bringen, besteht die Aufgabe an die Erfindung darin, ein Verfahren und eine Vorrichtung vorzustellen, mit denen die durch die Kupplung verursachten störenden Drehschwingungen des Antriebsstranges oder Fahrzeuglängsschwingungen zumindest in ihrer Amplitudenhöhe verringerbar sind.

Die Lösung dieser Aufgabe ergibt sich aus den Merkmalen des Verfahrens- und des Vorrichtungshauptanspruchs, während vorteilhafte Weiterbildungen und Ausgestaltungen der Erfindung den Unteransprüchen entnehmbar sind.

Demnach ist hinsichtlich des erfindungsgemäßen Verfahrens vorgesehen, dass von einer Steuerungs- und Regelungsvorrichtung mittels geeigneter Sensoren die störenden Schwingungen erkannt und bewertet werden. Bei einem Überschreiten von zuvor festgelegten Grenzwerten wirkt dann die Steuerungs- und Regelungsvorrichtung auf wenigstens eine Fahrzeugvorrichtung derart ein, dass durch deren Betätigung die störende Schwingung im Antriebsstrang und/oder im Gesamtfahrzeug vollständig beseitigt oder doch zumindest in ihrer Amplitude gedämpft wird. Dazu wird von der Steuerungs- und Regelungsvorrichtung über die wenigstens eine Fahrzeugvorrichtung derart auf wenigstens ein rotierendes Bauteil des Fahrzeugantriebsstranges eingewirkt, dass letzteres oder letztere kontinuierlich oder periodisch in ihrer Drehbewegung abgebremst oder zu einer Kompensationsschwingung angeregt werden.

In diesem Zusammenhang ist vorgesehen, dass die wenigstens eine Vorrichtung auf wenigstens ein Fahrzeugbauteil derart einwirkt, dass eine durch die Schwingungen im Antriebsstrang angeregte Längsschwingung des Gesamtfahrzeuges vollständig beseitigt oder zumindest in ihrer Amplitude gedämpft wird. Zur Erzeugung einer die störenden Schwingungen in Antriebsstrang oder im Gesamtfahrzeug zumindest in ihrer Amplitudenhöhe dämpfende Kompensationsschwingung oder zu einem derartig dämpfenden Bremseingriff auf rotierende Bauteile im Antriebsstrang weist diese Kompensationsschwingung oder der diesbezügliche Bremseingriff die gleiche oder eine ähnliche Frequenz und einen Schwingungsphasenversatz gegenüber der störend wirkenden Schwingung auf. Dieser Schwingungsphasenversatz führt zu einer gegenseitigen Kompensation der Schwingungsamplituden.

In einer Variante des erfindungsgemäßen Steuerungsverfahrens ist vorgesehen, dass eine auf die Eingangswelle eines Getriebes wirkende Getriebebremse von der Steuerungs- und Regelungsvorrichtung derart angesteuert wird, dass bei einem Anstieg der Schwingungsamplitude der störenden Schwingung die Getriebebremse die Getriebeeingangswelle auf eine Drehzahl abbremst, die die Amplitude der störenden Schwingung auf einen vorbestimmten und nicht störend wirkenden Wert reduziert. Ein solches Steuerungsverfahren ist insbesondere bei Antriebssträngen sinnvoll nutzbar, bei denen das Getriebe als automatisches oder automatisiert schaltbares Klauenstufenwechselgetriebe ausgebildet ist.

Bei Fahrzeugen, in deren Antriebsstrang eine verschleißfreie Dauerbremse, also beispielsweise ein antriebstechnisch hinter dem Getriebe angeordneter elektromagnetischer Retarder eingesetzt ist, kann diese Dauerbremse von der Steuerungs- und Regelungsvorrichtung derart angesteuert werden, dass bei einem Anstieg der Schwingungsamplitude der störenden Schwingung die Dauerbremse die Drehzahl der Radantriebswellen des Fahrzeugs soweit abbremst, dass die Amplitude der störenden Schwingung auf einen vorbestimmten Wert reduziert wird.

Eine andere Variante des erfindungsgemäßen Verfahrens sieht vor, dass die Betriebsbremsen der angetriebenen Fahrzeugräder von der Steuerungs- und Regelungsvorrichtung derart angesteuert werden, dass auch hier bei einem Anstieg der Schwingungsamplitude der störenden Schwingung die Fahrzeugräder auf eine Drehzahl abbremst werden, durch die die Amplitude der störenden Dreh- oder Längsschwingung auf einen vorbestimmten Wert reduziert wird.

Genauso gut kann durch die Steuerungs- und Regelungsvorrichtung auf ein Leistungsstellglied der Fahrzeugbrennkraftmaschine eingewirkt werden. Dazu wird verfahrensgemäß bei einem sensierten Anstieg der Schwingungsamplitude der störenden Schwingung die Drehzahl der Brennkraftmaschine so verändert, dass diese mit der Frequenz der schädlichen Schwingung oszilliert, jedoch zu dieser einen solchen Phasenversatz aufweist, durch den die Amplitude der störenden Schwingung auf einen vorbestimmten und nicht störenden Wert reduziert wird.

Ein derartiges Betriebsverhalten der Brennkraftmaschine ist besonders dann sinnvoll, wenn beim Fahrzeugrangieren das eingangs beschriebene Kupplungsrupfen auftritt. Die Steuerungs- und Regelungsvorrichtung regelt dabei die Drehzahl der Brennkraftmaschine beim Auftreten von Kupplungsrupfen so, dass während einer von dieser erkannten Rangierfahrt die Rangierdrehzahl (beispielsweise die Leerlaufdrehzahl) der Brennkraftmaschine derart erhöht wird, dass die Amplitude der störenden Schwingung auf einen vorbestimmten Wert reduziert wird. Die Rangierdrehzahl kann dazu einmalig oder auch stufenweise solange erhöht werden, bis die Schwingungskompensation erreicht ist.

Sofern in dem Antriebsstrang des Fahrzeuges ein Doppelkupplungsgetriebe vorhanden ist, können zur Beeinflussung der störenden Schwingungen die beiden Kupplungen derart genutzt werden, dass bei einem Erkennen des Kupplungsrupfens neben der für den eingelegten Getriebegang geschlossenen ersten Kupplung die zweite Kupplung hinsichtlich ihrer Drehmomentübertragungskapazität soweit, so häufig und solange von der Steuerungs- und Regelungsvorrichtung gesteuert betätigt wird, bis die Amplitude der störenden Schwingung auf einen vorbestimmten Wert reduziert ist. Dabei wird das in der Regel periodische Öffnen und Schließen der zweiten Kupplung des Doppelkupplungsgetriebes vorzugsweise mit der gleichen Frequenz erfolgen, wie sie die störende Schwingung aufweist, zu dieser jedoch einen Schwingungsphasenversatz aufweisen, durch der sich die Schwingungsamplituden zumindest weitgehend kompensieren.

In einer anderen Ausgestaltung des erfindungsgemäßen Steuerungsverfahrens kann vorgesehen sein, dass in einem Antriebsstrang mit einem Schaltgetriebe dessen Synchronisationsvorrichtung im Bereich eines gerade nicht geschalteten Getriebeganges so häufig und solange die Getriebeeingangswelle bremsend betätigt wird, bis die Amplitude der störenden Schwingung auf einen vorbestimmten Wert reduziert ist.

Schließlich soll erwähnt werden, dass die Steuerungs- und Regelungsvorrichtung zur Durchführung ihrer oben beschriebenen Steuerungs- und Regelungsaufgaben mit Hilfe von Drehzahlsensoren die Drehzahlen der Kupplungseingangsseite und der Kupplungsausgangsseite erfassen kann und die Fahrzeuglängsbeschleunigung mit Hilfe eines Längsbeschleunigungssensors ermittelbar ist, der beispielsweise im Bereich eines Fahrzeugsitzes angeordnet sein kann.

Hinsichtlich der Vorrichtung zur Durchführung der beschriebenen Steuerungs- und Regelungsfunktionen ist in dem Kraftfahrzeug zunächst eine Steuerungs- und Regelungsvorrichtung angeordnet, die vorzugsweise als Mikrocomputer ausgebildet ist. Der Mikrocomputer kann dabei beispielsweise ein Getriebe- oder Motorsteuerungsgerät sein. Diese Steuerungs- und Regelungsvorrichtung ist über Sensorleitungen mit den Sensoren zur Erfassung der störenden Schwingungen im Fahrzeug verbunden. Die Steuerungsleitungen führen dagegen zu Vorrichtungen im Antriebsstrang, mit denen Fahrzeugteile derart in Schwingungen versetzt oder abgebremst werden können, dass deren Frequenz, Schwingungsamplitude und Phasenlage gegenüber der Frequenz, Schwingungsamplitude und Phasenlage der störenden Schwingung bei einer Überlagerung dieser beiden Schwingungen zumindest zu einer Dämpfung der Amplitude der störenden Schwingung führt.

Zu den genannten Sensoren gehören Drehzahlsensoren, die beispielsweise die Drehzahl der Eingangsseite bzw. der Ausgangsseite einer Kupplung, vorzugsweise einer Anfahr- oder Schaltkupplung, oder anderer drehender Teile im Antriebsstrang erfassen. Zudem ist die Steuerungs- und Regelungsvorrichtung vorzugsweise mit einem Schwingungssensor verbunden, der eine störende Schwingung im Antriebsstrang oder im Gesamtfahrzeug sensieren kann. Mit einem solchen Sensor sind, wie bei der Beschreibung des Verfahrens erwähnt, vorzugsweise Längsschwingungen des Gesamtfahrzeuges im Bereich eines Fahrzeugsitzes erfassbar.

In einer anderen Ausgestaltung der Vorrichtung ist vorgesehen, dass die Steuerungs- und Regelungsvorrichtung mit einer Stellvorrichtung zur Betätigung der Kupplung über eine Steuerungsleitung verbunden ist. Durch diesen Aufbau kann die Kupplung vorzugsweise unabhängig von einer konventionellen Kupplungsbetätigungsvorrichtung zu dem gewünschten Kompensationsschwingungsverhalten angeregt oder beispielsweise eine Kupplungsandruckplatte periodisch oder ständig mit einer höheren Anpresskraft an den Reibbelag der Kupplungsscheibe angepresst werden.

Zudem kann hinsichtlich der erfindungsgemäßen Vorrichtung vorgesehen sein, dass die Steuerungs- und Regelungsvorrichtung mit einem Stellmittel zur Betätigung einer Synchronisationsvorrichtung in einem automatisierten oder automatischen Schaltgetriebe über eine Steuerungsleitung verbunden ist. Eine solche Stellvorrichtung kann eine hydraulisch oder pneumatisch betätigbare Kolben-Zylinder-Anordnung sein, mit der eine im Getriebe auf einer Getriebewelle angeordnete Schiebemuffe axial verschiebbar ist. Diese Schiebemuffe wirkt in an sich bekannter Weise auf axial verschiebliche Synchronringe, mit deren Hilfe ein Losrad auf der Getriebewelle abbremsbar in den Drehmomentübertragungsweg einkoppelbar ist.

Zur Durchführung des erfindungsgemäßen Verfahrens kann auch vorgesehen sein, dass die Steuerungs- und Regelungsvorrichtung mit der Stellvorrichtung einer Getriebebremse zur Abbremsung einer Eingangswelle eines Schaltgetriebes, vorzugsweise eines automatisierten Klauenkupplungsgetriebes, über eine entsprechende Steuerungsleitung verbunden ist. Diese Getriebebremse ist dann verfahrensgemäß unabhängig von ihren Synchronisationsaufgaben bei einem Gangschaltvorgang periodisch oder kontinuierlich zur Abbremsung der Getriebeeingangswelle und damit zur Reduzierung der störenden Schwingungen betätigbar.

In einer anderen Ausgestaltung der Vorrichtung zur Durchführung des erfindungsgemäßen Steuerungs- und Regelungsverfahrens ist vorgesehen, dass die Steuerungs- und Regelungsvorrichtung mit einer Retardervorrichtung, also mit einer verschleißlosen Dauerbremse zur Abbremsung der Antriebswellen der Fahrzeugantriebsräder über eine Steuerungsleitung verbunden ist. Schließlich kann das Steuerungs- und Regelungsverfahren gemäß der Erfindung auch mit einer Vorrichtung durchgeführt werden, bei der die Steuerungs- und Regelungsvorrichtung mit Stellgliedern an den Betriebsbremsen der angetriebenen Fahrzeugräder über Steuerungsleitungen verbunden ist. Durch einen entsprechenden Bremseingriff durch den Retarder oder durch die Betriebsbremsen an den angetriebenen Fahrzeugrädern kann zwar nicht das Entstehen der ungünstigen Drehschwingungen an der Kupplung vermieden werden, jedoch lässt sich durch eine solche Maßnahme die Dämpfung des Antriebsstranges periodisch oder für den Zeitraum des Auftretens des Kupplungsrupfens konstant erhöhen, so dass die Amplituden der störenden Schwingungen nicht unangenehm hoch sind.

Schließlich kann vorgesehen sein, dass die Steuerungs- und Regelungsvorrichtung mit einer Drehzahlverstellvorrichtung, also etwa mit dem Leistungsstellglied der Brennkraftmaschine über eine Steuerungsleitung verbunden ist. Durch die verfahrensgemäße Einflussnahme auf die Motordrehzahl lässt sich der gewünschte Erfolg ebenfalls erreichen.

Aus DE-A-195 38 784 ist ein Verfahren nach dem Oberbegriff in Anspruch 1, sowie eine Vorrichtung nach dem Oberbegriff in Anspruch 12 bekannt.

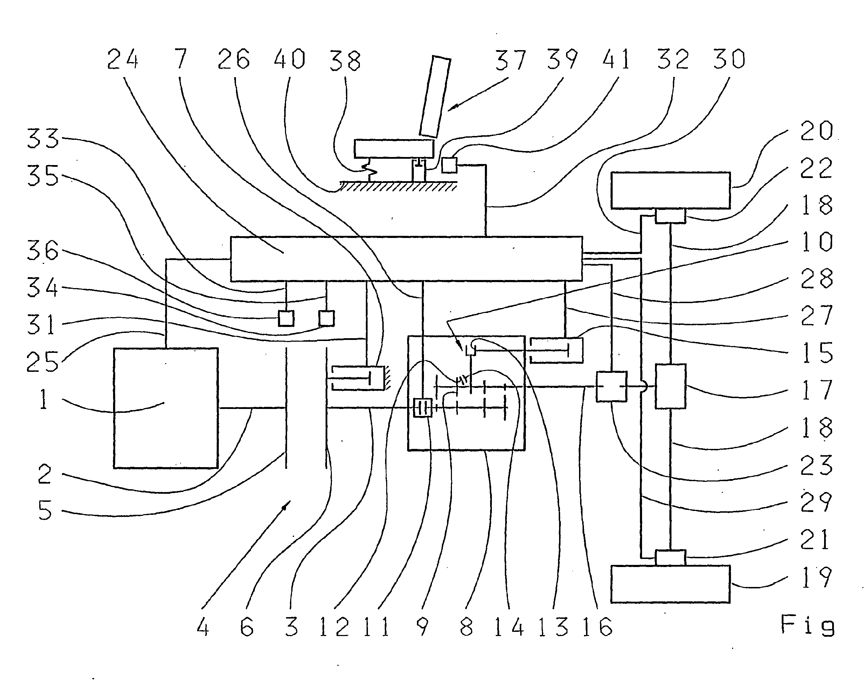

Das erfindungsgemäße Steuerungs- und Regelungsverfahren sowie die Vorrichtung zur Durchführung dieses Verfahrens lässt sich am besten mit Hilfe eines Ausführungsbeispiels der Erfindung erläutern. Dazu ist der Beschreibung eine Zeichnung beigefügt, in deren einzigen Figur in einer schematischen Darstellung der Antriebsstrang eines Kraftfahrzeuges samt einer Vielzahl von Varianten der erfindungsgemäßen Vorrichtung dargestellt ist.

In diesem Antriebsstrang ist eine Brennkraftmaschine 1 über eine Anfahrkupplung 4 wie an sich bekannt mit einem Schaltgetriebe 8 antriebstechnisch verbindbar. Dazu weist die Kupplung 4 eine Eingangsseite 5 auf, die mit der Kurbelwelle 2 der Brennkraftmaschine 1 verbunden ist, sowie eine Ausgangsseite, die mit der Eingangswelle 3 des Getriebes 8 in Verbindung steht. Die Ausgangswelle 16 dieses Getriebes 8 treibt über eine verschleißlose Dauerbremse 23, also beispielsweise über einen elektromagnetisch arbeitenden Retarder, ein Differentialgetriebe 17 an, von dem zwei Antriebswellen 18 für Fahrzeugräder 19, 20 abgehen.

An den Fahrzeugrädern 19, 20 sind Betriebsbremsen 21, 22 angeordnet, die als Trommel- oder Scheibenbremsen ausgebildet sein können. Zudem ist eine Steuerungs- und Regelungsvorrichtung 24 dargestellt, die vorzugsweise einen Mikrocomputer umfasst und integraler Bestandteil eines Motor- oder Getriebesteuerungsgerätes sein kann.

Schließlich zeigt diese Figur als letzte Fahrzeughauptkomponente einen Fahrzeugsitz 37, auf dem ein Fahrzeuginsasse Schwingungen im Fahrzeug wahrnehmen kann. Der Fahrzeugsitz 37 ist in dieser vereinfachten Darstellung hinsichtlich der Übertragung der durch den Antriebsstrang erzeugten Schwingungen physikalisch über ein Feder-Dämpfungs-System an dem Fahrzeugboden befestigt, was hier durch eine Feder 38 und einen Dämpfungskolben 39 angedeutet wird.

Wie eingangs erläutert wurde, können in bestimmten Betriebsphasen, wie beispielsweise während des Rangierbetriebs des Fahrzeugs, in der Fahrzeugkupplung 4 entstehende Drehschwingungen über alle Hauptkomponenten des Antriebsstranges zu den Fahrzeugrädern 19, 20 gelangen, wo diese Drehschwingungen in Längsschwingungen umgewandelt und über die Radaufhängung in die Fahrzeugkarosserie eingeleitet werden. Diese Längsschwingungen werden von einem auf dem Fahrzeugsitz 37 befindlichen Fahrer als unangenehm empfunden, so dass es der erfindungsgemäßen Maßnahmen bedarf, um diese Schwingungen zumindest auf ein erträgliches Maß zu reduzieren.

Dazu ist es zunächst einmal notwenig, dass die Drehschwingungen im Antriebsstrang oder die daraus resultierenden Längsschwingungen der Karosserie von entsprechenden Sensoren festgestellt und der Steuerungs- und Regelungsvorrichtung mitgeteilt werden. Dazu sind in dieser Figur zwei alternative Sensortypen dargestellt, die einzeln oder gemeinsam benutzt werden können. So ist an der Eingangsseite 5 und an der Ausgangsseite 6 der Kupplung 4 jeweils ein Drehzahlsensor 34, 36 angeordnet, mit deren Hilfe die das Kupplungsrupfen kennzeichnenden Drehschwingungen der Kupplung 4 feststellbar sind. Diese Drehzahlinformationen sind über Sensorleitungen 33, 35 an die Steuerungs- und Regelungsvorrichtung 24 weiterleitbar. Die die störenden Drehschwingungen kennzeichnenden Drehzahlwerte lassen sich aber auch an allen anderen drehenden Teilen des Antriebsstrangs messtechnisch ermitteln.

Eine andere Möglichkeit zur Sensierung der störenden Schwingungen im Fahrzeug besteht darin, beispielsweise im Bereich des Fahrzeugsitzes 37 einen Sensor 41 zur Erfassung von Fahrzeuglängsschwingungen anzuordnen, der über eine gesonderte Sensorleitung 32 mit der genannten Steuerungs- und Regelungsvorrichtung 24 verbunden ist.

Sofern die Steuerungs- und Regelungsvorrichtung 24 aufgrund der erwähnten Sensorinformationen festgestellt hat, dass die beispielsweise an der Kupplung 4 ermittelten Drehschwingungen und/oder die an der Fahrzeugkarosserie auftretenden Längsschwingungen einen vorbestimmten und in der Steuerungs- und Regelungsvorrichtung abgespeicherten Amplitudengrenzwert überschreiten, werden Gegenmaßnahmen getroffen, die im Kern alle dazu dienen, die Amplitude der störenden Schwingung (Fahrzeuglängsschwingung oder Drehschwingung im Antriebsstrang) so weit zu reduzieren, dass diese vorzugsweise unterhalb der Wahrnehmungsgrenze eines auf dem Fahrzeugsitz befindlichen Fahrzeuginsassen abgesenkt werden. Dies wird dadurch erreicht, dass wenigstens eine Vorrichtung am oder im Antriebsstrang des Fahrzeuges derart auf wenigstens ein Bauteil im Fahrzeugantriebsstrangs einwirkt, dass letzteres kontinuierlich oder periodisch derart in seiner Drehbewegung abgebremst oder zu einer Schwingung angeregt wird, so dass die Schwingungsamplitude der störenden Schwingung reduziert wird.

Eine erste Variante zur Durchführung dieses Steuerungs- und Regelungsverfahrens lässt sich dadurch technisch umsetzen, dass mittels einer Stellvorrichtung 7, hier eine Kolben-Zylinder-Anordnung, auf ein drehendes Bauteil der Kupplung 4 derart aktiv eingewirkt wird, dass die störende Drehschwingung der Kupplung 4 gedämpft wird. Dazu ist die Stellvorrichtung 7 in diesem Ausführungsbeispiel mit der Ausgangsseite 6 der Kupplung 4 verbunden. Die Wirkrichtung der Kolben-Zylinder-Anordnung 7 wird dabei vorzugsweise in oder entgegen der Drehrichtung des Kupplungsbauteils 6 gerichtet sein, wenngleich auch ein axiales Einwirken auf die Kupplung 4 sinnvoll sein kann. Die Betätigungssignale erhält die Kolben-Zylinder-Anordnung 7 über die Steuerungsleitung 31 von der Steuerungs- und Regelungsanordnung 24.

In einer Ausgestaltung der Erfindung kann eine Getriebebremse 11 dazu genutzt werden, die im Antriebsstrang vorhandenen und störenden Schwingungen abzubauen. Eine solche Getriebebremse 11 ist in automatisierten Klauenschaltgetrieben 8 in der Regel sowieso vorgesehen, um mit deren Hilfe bei Hochschaltvorgängen die Drehzahl der Getriebeeingangswelle 3 auf die Synchrondrehzahl des höheren Ganges abzubremsen. Diese Getriebebremse 11 kann aber unabhängig von derartigen Schaltsynchronisationsaufgaben von der Steuerungs- und Regelungsvorrichtung 24 auch dazu aktiviert oder deaktiviert werden, um die störenden Drehschwingungen des Kupplungsrupfens auf ein für den Fahrer erträgliches Maß abzubauen. So kann diese Getriebebremse 11 beispielsweise immer dann kurzzeitig geschlossen werden, wenn die Steuerungs- und Regelungsvorrichtung 24 eine ansteigende Flanke der genannten Antriebsstrangdreh- oder Fahrzeuglängsschwingung feststellt. Auf diese Weise wird die Amplitude der störenden Schwingungen reduziert.

Der beschriebene Bremseffekt lässt sich bei voll synchronisierten Schaltgetrieben auch dadurch erreichen, dass Gangsynchronisationsmittel eines nicht geschalteten Ganges ebenfalls dann aktiviert werden, wenn die Steuerungs- und Regelungsvorrichtung 24 eine ansteigende Flanke der genannten Antriebsstrangdreh- oder Fahrzeuglängsschwingung feststellt. Auch auf diese Weise wird die Amplitude der störenden Schwingungen gedämpft. In der hier erläuterten schematischen Zeichnung ist dazu im Schaltgetriebe 8 eine Synchronisationsvorrichtung 10 vorgesehen, bei der eine auf der Getriebeausgangswelle 16 drehfest aber axial verschieblich angeordnete Schiebemuffe 13 mit einem Synchronring 14 zusammenwirkt, dessen schräge Synchronfläche bei einer Axialverschiebung auf der Getriebeausgangswelle 16 gegen die Synchronschräge 12 eines auf dieser Welle 16 angeordneten Losrades 9 gedrückt wird. Die Schiebemuffe 13 wird dazu beim Auftreten von Kupplungsrupfen von einer Stellvorrichtung 15 (Kolben-Zylinder-Anordnung) auf der Getriebeausgangswelle 16 axial verschoben, wobei die Stellvorrichtung 15 ihre Stellbefehle über eine Steuerungsleitung 27 von der Steuerungs- und Regelungsvorrichtung 24 erhält. Dabei wird das Losrad 9 zumindest zeitweise mit der Getriebeausgangswelle 16 drehfest verbunden, was bremsend und drehschwingungsdämpfend auf den nachgeordneten Antriebsstrang wirkt.

Zudem zeigt die Figur, dass auch eine verschleißlose Betriebsbremse (Retarder) 23, die antriebstechnisch hinter dem Getriebe 8 angeordnet ist, zur Drehschwingungsdämpfung durch Abbremsen einer Antriebsstrangwelle, wie beispielsweise einer Kardanwelle, genutzt werden kann. Bei einem schnell reagierenden Retarder 23 kann dieser auch zur Erzeugung einer Kompensationsschwingung genutzt werden, bei der die Phasenlage der Kompensationsschwingung gegenüber der Phasenlage der störenden Drehschwingung im Antriebsstrang derart verschoben ist, dass die sich einander überlagernden Schwingungen sich diese zumindest teilweise gegenseitig auslöschen.

Der beschriebene Effekt lässt sich auch durch eine entsprechende Aktivierung der Betriebsbremsen 21, 22 der angetriebenen Fahrzeugräder 19, 20 erreichen, die ebenfalls nach den vorgenannten Steuerungsregeln erfolgt. Besonders vorteilhaft bei dieser technischen Lösung ist, dass auch hierbei keine zusätzlichen Stellglieder an den Betriebsbremsen 21, 22 benötigt werden, sondern vorhanden elektrohydraulischen Bremsstellvorrichtungen über Steuerungsleitungen 29, 30 von der Steuerungs- und Regelungsvorrichtung 24 ansteuerbar sind.

Außerdem kann auch die Brennkraftmaschine 1 hinsichtlich ihrer Motordrehzahl so von der Steuerungs- und Regelungsvorrichtung 24 über eine Steuerungsleitung 25 gesteuert und geregelt werden, dass eine Motordrehzahlschwingung mit gleicher Frequenz aufgebaut wird, wenn die Steuerungs- und Regelungsvorrichtung 24 eine ansteigende Flanke der genannten Antriebsstrangdreh- oder Fahrzeuglängsschwingung feststellt. Durch die dann unterschiedlichen Drehzahldifferenzen an der Kupplung und der daraus folgenden Reibwertänderungen wird die Rupfschwingung gedämpft.

Nachteilig ist bei dieser Methode jedoch, dass im zeitlichen Verlauf der Motordrehzahl ein Sägezahnmuster enthalten ist, das aber von einem Fahrzeuginsassen als wesentlich weniger nachteilig empfunden wird als die beschriebenen Rupfschwingungen.

Zudem kann vorgesehen sein, dass die Steuerungs- und Regelungsvorrichtung 24 über geeignete Mittel zur Feststellung eines Rangierbetriebes des Kraftfahrzeuges verfügt. In einem solchen Betriebsfall wird die Rangierdrehzahl der Brennkraftmaschine durch die Steuerungs- und Regelungsvorrichtung 24 beim Auftreten von Kupplungsrupfen angehoben. Dies kann schrittweise durch entsprechende Signale über die Steuerungsleitung 25 beispielsweise an das Leistungsstellglied der Brennkraftmaschine 1 erfolgen. Vorteilhaft ist diese brennkraftmaschinenbezogene Dämpfung der Rupfschwingung auch deshalb, weil hierzu keine zusätzliche Aktuatorik notwendig ist.

Schließlich soll der Vollständigkeit halber darauf hingewiesen werden, dass auch bei einem in der Figur nicht dargestellten Antriebsstrang mit einem Doppelkupplungsgetriebe eine Dämpfung der Kupplungsrupfschwingungen dadurch erreichbar ist, dass mittels des Kupplungsaktuators der zweiten Getriebekupplung diese mit der Frequenz der störenden Schwingung aber mit dem schon erwähnten Phasenversatz kurzzeitig periodisch wenigstens teilweise schließbar ist, um über die so ausgelöste Bremswirkung die Amplitude der störenden Schwingung zu reduzieren.

Das erfindungsgemäße Verfahren und die erfindungsgemäße Vorrichtung zu Durchführung des genannten Verfahrens können einzelne oder aber auch mehrere der unterschiedlichen Verfahrens- und Vorrichtungsausgestaltungen umfassen.

Neben den dargestellten Sensoren sind auch andere Drehzahlsensoren im Antriebsstrang anwendbar, deren Signale durch eine entsprechende Umrechnung in einer elektronischen Einheit die erforderlichen Informationen ergeben.

### Bezugszeichen

- 1: Brennkraftmaschine
- 2: Kurbelwelle
- 3: Getriebeeingangswelle
- 4: Kupplung
- 5: Eingangsseite der Kupplung
- 6: Ausgangsseite der Kupplung
- 7: Stellvorrichtung, Kolben-Zylinder-Anordnung
- 8: Getriebe
- 9: Zahnrad
- 10: Synchronisiervorrichtung
- 11: Getriebebremse
- 12: Synchronisierschräge
- 13: Schiebemuffe
- 14: Synchronring
- 15: Stellvorrichtung, Kolben-Zylinder-Anordnung
- 16: Getriebeausgangswelle
- 17: Differentialgetriebe
- 18: Antriebswellen der angetriebenen Fahrzeugräder
- 19: Fahrzeugrad
- 20: Fahrzeugrad
- 21: Betriebsbremse
- 22: Betriebsbremse
- 23: Retarder, Dauerbremse
- 24: Steuerungs- und Regelungsvorrichtung
- 25: Steuerungsleitung
- 26: Steuerungsleitung
- 27: Steuerungsleitung
- 28: Steuerungsleitung
- 29: Steuerungsleitung
- 30: Steuerungsleitung
- 31: Steuerungsleitung
- 32: Sensorleitung
- 33: Sensorleitung
- 34: Drehzahlsensor
- 35: Sensorleitung
- 36: Drehzahlsensor
- 37: Fahrzeugsitz
- 38: Feder
- 39: Dämpfer
- 40: Fahrzeugboden
- 41: Schwingungssensor

## Patentansprüche

1. Verfahren zur Reduzierung von durch eine Kupplung verursachte Schwingungen in einem Kraftfahrzeug, bei dem von einer Steuerungs- und Regelungsvorrichtung mittels geeigneter Sensoren die störenden Schwingungen festgestellt und bei einem Überschreiten von zuvor festgelegten Grenzwerten durch die Steuerungs- und Regelungsvorrichtung wenigstens eine Vorrichtung derart betätigt wird, dass die störende Schwingung vollständig beseitigt oder zumindest in ihrer Amplitude gedämpft wird, **dadurch gekennzeichnet, dass** die wenigstens eine Vorrichtung derart auf wenigstens ein anfahrkupplungsfernes rotierendes Bauteil im Fahrzeugantriebsstrang einwirkt, dass letzteres oder letztere beim Auftreten der durch die Kupplung verursachten Schwingungen kontinuierlich oder periodisch in ihrer Drehbewegung abgebremst oder zu einer Kompensationsschwingung angeregt werden.

2. Verfahren nach Anspruch 1, **dadurch gekennzeichnet dass** die Kompensationsschwingung oder der Bremseingriff die gleiche oder eine ähnliche Frequenz aufweist wie die störend wirkende Schwingung, jedoch zu dieser einen Schwingungsphasenversatz aufweist, der zu einer Reduzierung der Amplitude der störenden Schwingung führt.

3. Verfahren nach wenigstens einem der Ansprüche 1 oder 2, **dadurch gekennzeichnet, dass** eine auf die Eingangswelle im Antriebsstrang wirkende Getriebebremse von der Steuerungs- und Regelungsvorrichtung derart angesteuert wird, dass bei einem Anstieg der Schwingungsamplitude der störenden Schwingung die Getriebebremse die Getriebeeingangswelle auf eine Drehzahl abbremst, die die Amplitude der störenden Schwingung auf einen vorbestimmten Wert reduziert.

4. Verfahren nach wenigstens einem der Ansprüche 1 oder 2, **dadurch gekennzeichnet, dass** eine antriebstechnisch hinter dem Getriebe angeordnete verschleißlose Dauerbremse von der Steuerungs- und Regelungsvonichtung derart angesteuert wird, dass bei einem Anstieg der Schwingungsamplitude der störenden Schwingung die Dauerbremse die Drehzahl der Radantriebswellen derart abbremst, dass die Amplitude der störenden Längsschwingung auf einen vorbestimmten Wert reduziert wird.

5. Verfahren nach wenigstens einem der Ansprüche 1 oder 2, **dadurch gekennzeichnet, dass** die Betriebsbremsen an den angetriebenen Fahrzeugrädern von der Steuerungs- und Regelungsvorrichtung derart angesteuert werden, dass bei einem Anstieg der Schwingungsamplitude der störenden Schwingung die angetriebenen Fahrzeugräder auf eine Drehzahl abbremst werden, durch die die Amplitude der störenden Schwingung auf einen vorbestimmten Wert reduziert wird.

6. Verfahren nach wenigstens einem der Ansprüche 1 oder 2, **dadurch gekennzeichnet, dass** die Fahrzeugbrennkraftmaschine von der Steuerungs- und Regelungsvorrichtung derart angesteuert wird, dass die Drehzahl der Brennkraftmaschine mit der Frequenz der störenden Schwingung oszilliert, jedoch zu dieser einen Phasenversatz aufweist, durch den die Amplitude der störenden Schwingung auf einen vorbestimmten Wert reduziert wird.

7. Verfahren nach Anspruch 6, **dadurch gekennzeichnet, dass** die Steuerungs- und Regelungsvorrichtung während einer von dieser erkannten Rangierfahrt die Rangierdrehzahl, vorzugsweise die Leerlaufdrehzahl der Brennkraftmaschine derart erhöht, dass die Amplitude der störenden Schwingung auf einen vorbestimmten Wert reduziert wird.

8. Verfahren nach Anspruch 7, **dadurch gekennzeichnet, dass** die Rangierdrehzahl der Brennkraftmaschine stufenweise solange erhöht wird, bis die Amplitude der störenden Schwingung auf einen vorbestimmten Wert reduziert ist.

9. Verfahren nach wenigstens einem der Ansprüche 1 oder 2, **dadurch gekennzeichnet, dass** bei einem Doppetkupplungsgetriebe zusätzlich zu der für den geschalteten Gang geschlossenen ersten Kupplung die zweite Kupplung hinsichtlich ihrer Drehmomentübertragungskapazität soweit, so häufig und mit einem solchen Schwingungsphasenversatz zur störenden Schwingung solange betätigt wird, bis die Amplitude der störenden Schwingung auf einen vorbestimmten Wert reduziert ist.

10. Verfahren nach wenigstens einem der Ansprüche 1 oder 2, **dadurch gekennzeichnet, dass** bei einem Schaltgetriebe eine Synchronisationsvorrichtung für einen gerade nicht geschalteten Getriebegang so weit, so häufig und mit einem solchen Schwingungsphasenversatz zur störenden Schwingung solange betätigt wird, bis die Amplitude der störenden Schwingung auf einen vorbestimmten Wert reduziert ist.

11. Verfahren nach wenigstens einem der Ansprüche 1 oder 2, **dadurch gekennzeichnet, dass** die Steuerungs- und Regelungsvorrichtung mit Hilfe von Drehzahlsensoren die Drehzahlen der Kupplungseingangsseite und der Kupplungsausgangsseite erfasst, und dass die Fahrzeuglängsbeschleunigung mit Hilfe eines Längsbeschleunigungssensors durch die Steuerungs- und Regelungsvorrichtung ermittelbar ist.

12. Vorrichtung zur Durchführung des Verfahrens nach wenigstens einem der Ansprüche 1 bis 11, **gekennzeichnet durch** eine Steuerungs- und Regeiungsvorrichtung (24), die über Sensorleitungen (32, 33, 35) mit Drehzahlsensoren (34, 36) und/oder Schwingungssensoren (41) zur Erfassung einer störenden Schwingung im Antriebsstrang und/oder im Gesamtfahrzeug verbunden ist, sowie über Steuerungsleitungen (25, 26, 27, 28, 29, 30, 31) mit Vorrichtungen (7, 11, 15, 21, 22, 23) signaltechnisch in Verbindung steht, mit denen anfahrkupplungsfeme Fahrzeugteile derart in Schwingungen versetzt oder abgebremst werden können, dass deren Schwingungsfrequenz, Schwingungsamplitude und Schwingungsphasenlage im Vergleich zur Frequenz, Amplitude und Schwingungsphasenlage der störenden Schwingung so ausgebildet sind, dass diese bei einer Überlagerung mit der störenden Schwingung zumindest zu einer Dämpfung der Amplitude der störenden Schwingung führt.

13. Vorrichtung nach Anspruch 12, **dadurch gekennzeichnet, dass** mit den Drehzahlsensoren (34, 36) die Drehzahl der Eingangsseite (5) bzw. der Ausgangsseite (6) einer Kupplung (4), vorzugsweise einer Anfahr- oder Schaltkupplung erfassbar sind.

14. Vorrichtung nach Anspruch 12, **dadurch gekennzeichnet, dass** mit dem Schwingungssensor (41) eine störende Fahrzeuglängsschwingung, vorzugsweise im Bereich eines Fahrzeugsitzes (37) erfassbar ist.

15. Vorrichtung nach Anspruch 12, **dadurch gekennzeichnet, dass** die Steuerungs- und Regetungsvorrichtung (24) mit einer Stellvorrichtung (15) zur Betätigung einer Synchronisationsvorrichtung (10) in einem Schaltgetriebe (8) über eine Steuerungsleitung (27) verbunden ist.

16. Vorrichtung nach Anspruch 12, **dadurch gekennzeichnet, dass** die Steuerungs- und Regelungsvorrichtung (24) mit einer Getriebebremse (11) zur Abbremsung einer Getriebeeingangswelle (3) eines Schaltgetriebes (8) über eine Steuerungsleitung (26) verbunden ist.

17. Vorrichtung nach Anspruch 12, **dadurch gekennzeichnet, dass** die Steuerungs- und Regelungsvorrichtung (24) mit einer verschleißfesten Dauerbremse (23) zur Abbremsung von Fahrzeugantnebsweiten (18) über eine Steuerungsleitung (28) verbunden ist.

18. Vorrichtung nach Anspruch 12, **dadurch gekennzeichnet, dass** die Steuerungs- und Regelungsvonichtung (24) mit Betriebsbremsen (21, 22) an den antreibenden Fahrzeugrädern (19, 20) über Steuerungsleitungen (28, 29) verbunden ist.

19. Vorrichtung nach Anspruch 12, **dadurch gekennzeichnet, dass** die Steuerungs- und Regelungsvomchtung (24) mit einer Drehzahlversteltvorrichtung, vorzugsweise mit einem Leistungsstellglied an der Brennkraftmaschine (1) des Fahrzeugs über eine Steuerungsleitung (25) verbunden ist.

## Claims

1. The invention relates to a method for the reduction of clutch-induced vibrations in a motor vehicle according to which a control device detects disturbing vibrations by means of suitable sensors and, in the event of preset limit values being exceeded, actuates at least one device in such a way that disturbing vibrations are completely eliminated or at least attenuated regarding their amplitude, **characterized in that** said device acts on at least one starting-clutch-remote rotating component of the driveline in such a way that the latter component or components is or are continuously or periodically slowed down in its or their rotary motion or is or are excited to perform compensatory vibrations as soon as clutch-induced vibrations occur.

2. A method according to claim 1, **characterized in that** the compensatory vibrations or the braking interventions are marked by the same frequency as, or a frequency similar to, the disturbing vibrations, while they are however marked by a phase shift, which results in a reduction of the amplitude of the disturbing vibrations.

3. A method according to at least one of the claims 1 or 2, **characterized in that** a transmission brake acting on the input shaft in the driveline is controlled by the control device in such a manner that, in the event of an increase of the amplitude of the disturbing vibration, the transmission brake will retard the speed of the transmission input shaft to a level which will reduce the amplitude of the disturbing vibration to a predetermined value.

4. A method according to at least one of the claims 1 or 2, **characterized in that** a nonwearing continuous-service brake, which in terms of driveline engineering is arranged behind the transmission, is controlled by the control unit in such a manner that, in the event of an increase of the amplitude of the disturbing vibration, the continuous-service brake will retard the speed of the final-drive shafts to such an extent that the amplitude of the disturbing longitudinal vibration is reduced to a predetermined value.

5. A method according to at least one of the claims 1 or 2, **characterized in that** the service brakes on the driven automotive wheels are controlled by the control device in such a manner that, in the event of an increase of the amplitude of the disturbing vibration, the speed of the driven automotive wheels is retarded to a level which will reduce the amplitude of the disturbing vibration to a predetermined value.

6. A method according to at least one of the claims 1 or 2, **characterized in that** the vehicle's combustion engine is controlled by the control device in such a manner that the speed of the combustion engine oscillates with the frequency of the disturbing vibration, but is marked by a phase shift, through which the amplitude of the disturbing vibration is reduced to a predetermined value.

7. A method according to claim 6, **characterized in that** in the event of a maneuver being detected by the control device, this unit will increase the maneuvering speed, preferably the idling speed, of the combustion engine to such an extent that the amplitude of the disturbing vibration is reduced to a predetermined value.

8. A method according to claim 7, **characterized in that** the maneuvering speed of the combustion engine is increased step by step until the amplitude of the disturbing vibration is reduced to a predetermined value.

9. A method according to at least one of the claims 1 or 2, **characterized in that** in a twin-clutch transmission a second clutch, in addition to the first clutch closed for the engaged gear, is actuated regarding its torque-transmitting capacity by a phase-shifted vibration until the amplitude of the disturbing vibration is reduced to a predetermined value.

10. A method according to at least one of the claims 1 or 2, **characterized in that** in a manual transmission a synchronizing device for a non-shifted transmission gear is actuated by a phase-shifted vibration until the amplitude of the disturbing vibration is reduced to a predetermined value.

11. A method according to at least one of the claims 1 or 2, **characterized in that** the control device registers the speeds of the clutch input and output ends by means of speed sensors, and that the longitudinal vehicle acceleration can be determined by the control device by means of a longitudinal acceleration sensor.

12. A system for the realization of the method according to at least one of the claims 1 through 11, **characterized by** a control device (24), which is connected via sensor lines (32, 33, 35) to speed sensors (34, 36) and/or vibration sensors (41) for the registration of disturbing vibration in the driveline and/or the overall vehicle, and which is connected via control lines (25, 26, 27, 28, 29, 30, 31) for signaling connection with devices (7, 11, 15, 21, 22, 23), with which starting-clutch-remote vehicle components can be made to vibrate or retard to the extent that, compared to the frequency, amplitude and vibration phase relation of the disturbing vibration, their vibration frequency, amplitude and phase relation is such that, in the event of superimposition of the disturbing vibration, this will result in the amplitude of the disturbing vibration being at least attenuated.

13. A device according to claim 12, **characterized in that** the speed of the input end (5) or the output end (6) of a clutch (4), preferably of a starting or a shifting clutch, can be registered by speed sensors (34, 36).

14. A device according to claim 12, **characterized in that** disturbing longitudinal vehicle vibration can be registered by the vibration sensor (41), preferably in the area of a vehicle seat (37).

15. A device according to claim 12, **characterized in that** the control device (24) is connected via a control line (27) to a setting device (15) for actuation of a synchronizing device (10) in a manual transmission (8).

16. A device according to claim 12, **characterized in that** the control device (24) is connected via a control line (26) to a transmission brake (11) for deceleration of a transmission input shaft (3) of a manual transmission (8).

17. A device according to claim 12, **characterized in that** the control device (24) is connected via a control line (28) to a nonwearing continuous-service brake (23) for the deceleration of vehicle drive shafts (18).

18. A device according to claim 12, **characterized in that** the control device (24) is connected via control lines (28, 29) to service brakes (21, 22) on the driving automotive wheels (19, 20).

19. A device according to claim 12, **characterized in that** the control device (24) is connected via a control line (25) to a speed-adjusting element, preferably a power actuator on the combustion engine (1) of the vehicle.

## Revendications

1. Méthode de réduction de vibrations dans un véhicule automobile causées par un embrayage, selon laquelle un dispositif de commande et de réglage détecte à l'aide de capteurs appropriés les vibrations parasites et selon laquelle en cas de dépassement de valeurs seuils prédéfinies le dispositif de commande et de réglage actionne au moins un dispositif de manière à ce que les vibrations parasites soient ou complètement éliminées ou au moins amorties dans leur amplitude, **caractérisée en ce que** l'au moins un dispositif agit de telle manière sur au moins un élément rotatif monté éloigné de l'embrayage de démarrage dans la chaîne cinématique du véhicule que, en cas d'apparition des vibrations causées par l'embrayage, le mouvement rotatif de ce dernier ou de ces derniers est continuellement et périodiquement ralenti ou que ceux-ci sont excités pour produire une vibration compensatoire.

2. Méthode selon la revendication 1, **caractérisée en ce que** la vibration compensatoire ou l'intervention des freins présente la même fréquence ou une fréquence similaire à la vibration parasite, comportant toutefois un décalage de phase de vibration par rapport à celle-ci entraînant une réduction de l'amplitude de la vibration parasite.

3. Méthode selon au moins une des revendications 1 ou 2, **caractérisée en ce que** un frein de boîte de vitesses agissant sur l'arbre d'entrée de la chaîne cinématique est commandé par le dispositif de commande et de réglage de manière à ce que en cas d'augmentation de l'amplitude de la vibration parasite le frein de boîte réduit la vitesse de rotation de l'arbre d'entrée de la boîte de vitesses à une valeur permettant de réduire l'amplitude de la vibration parasite à une valeur prédéterminée.

4. Méthode selon au moins une des revendications 1 ou 2, **caractérisée en ce que** un frein continu exempt d'usure et disposé à des fins d'entraînement en aval de la boîte de vitesses, est commandé par le dispositif de commande et de réglage de manière à ce que en cas d'augmentation de l'amplitude de la vibration parasite le frein continu réduit la vitesse de rotation des arbres d'entraînement des roues de manière à ce que l'amplitude de la vibration longitudinale parasite est réduite à une valeur prédéterminée.

5. Méthode selon au moins une des revendications 1 ou 2, **caractérisée en ce que** les freins de service des roues entraînées du véhicule sont commandées par le dispositif de commande et de réglage de manière à ce que en cas d'augmentation de l'amplitude de la vibration parasite la vitesse de rotation des roues entraînées du véhicule est réduite à une valeur permettant de réduire l'amplitude de la vibration parasite à une valeur prédéterminée.

6. Méthode selon au moins une des revendications 1 ou 2, **caractérisée en ce que** le moteur à combustion interne du véhicule est commandé par le dispositif de commande et de réglage de manière à ce que la vitesse de rotation du moteur à combustion interne oscille en fonction de la fréquence de la vibration parasite, comportant toutefois un décalage de phase par rapport à celle-ci, à l'aide duquel l'amplitude de la vibration parasite est réduite à une valeur prédéterminée.

7. Méthode selon la revendication 6, **caractérisée en ce que** pendant un parcours de manoeuvre détecté par le dispositif de commande et de réglage, celui-ci augmente le régime de manoeuvre - de préférence le régime de ralenti du moteur à combustion interne - de manière à ce que l'amplitude de la vibration parasite est réduite à une valeur prédéterminée.

8. Méthode selon la revendication 7, **caractérisée en ce que** le régime de manoeuvre du moteur à combustion interne est augmenté progressivement jusqu'à ce que l'amplitude de la vibration parasite est réduite à une valeur prédéterminée.

9. Méthode selon au moins une des revendications 1 ou 2, **caractérisée en ce que** en cas d'une boîte de vitesses à double embrayage, en plus d'un premier embrayage fermé pour le rapport engagé, le deuxième embrayage est commandé en termes de sa capacité de transmission de couple, jusqu'à un tel degré, si fréquemment et aussi longtemps avec un tel décalage de la phase de vibration par rapport à la vibration parasite que l'amplitude de la vibration parasite est réduite à une valeur prédéterminée.

10. Méthode selon au moins une des revendications 1 ou 2, **caractérisée en ce que** en cas d'une boîte de vitesses mécanique, un dispositif de synchronisation des rapports qui à un moment donné ne sont pas engagés, est commandé jusqu'à un tel degré, si fréquemment et aussi longtemps avec un tel décalage de la phase de vibration par rapport à la vibration parasite que l'amplitude de la vibration parasite est réduite à une valeur prédéterminée

11. Méthode selon au moins une des revendications 1 ou 2, **caractérisée en ce que** le dispositif de commande et de réglage peut enregistrer à l'aide de capteurs de régime les régimes du côté entrée de l'embrayage et du côté sortie de l'embrayage, et **en ce qu'**il est possible de déterminer l'accélération longitudinale du véhicule par l'intermédiaire du dispositif de commande et de réglage et à l'aide d'un capteur de l'accélération longitudinale.

12. Dispositif pour la réalisation de la méthode selon au moins une des revendications 1 à 11, **caractérisé par** un dispositif de commande et de réglage (24), celui-ci étant lié par l'intermédiaire de lignes de capteurs (32, 33, 35) à des capteurs de régime (34, 36) et/ou à des capteurs de vibrations (41) pour l'enregistrement de vibrations parasites dans la chaîne cinématique et/ou dans le véhicule, ainsi que par l'intermédiaire de lignes de commande (25, 26, 27, 28, 29, 30, 31) à des fins de transmission de signaux à des dispositifs (7, 11, 15, 21, 22, 23), à l'aide desquels des composants du véhicule éloignés de l'embrayage de démarrage puissent être excités ou freinés de manière à ce que, par rapport à la fréquence, l'amplitude et la position de la phase de la vibration parasite, leur fréquence de vibration, amplitude de vibration et position de la phase de vibration soient de telle manière qu'elles entraînent en cas d'une superposition avec la vibration parasite au moins un amortissement de l'amplitude de la vibration parasite.

13. Dispositif selon la revendication 12, **caractérisé en ce que** le régime du côté entrée (5) ou du côté sortie (6) d'un embrayage (4), de préférence d'un embrayage de changement de vitesses, peuvent être enregistrés à l'aide de capteurs de régime (34, 36).

14. Dispositif selon la revendication 12, **caractérisé en ce que** le capteur de vibration (41) permet d'enregistrer une vibration parasite longitudinale dans le véhicule, de préférence dans la zone du siège conducteur (37).

15. Dispositif selon la revendication 12, **caractérisé en ce que** le dispositif de commande et de réglage (24) est lié à un dispositif actionneur (15) pour l'actionnement d'un dispositif de synchronisation (10) dans une boîte de vitesses mécanique (8) par l'intermédiaire d'une ligne de commande (27).

16. Dispositif selon la revendication 12, **caractérisé en ce que** le dispositif de commande et de réglage (24) est lié à un frein de boîte de vitesses (11) pour le freinage d'un arbre d'entrée (3) d'une boîte de vitesses mécanique (8) par l'intermédiaire d'une ligne de commande (26).

17. Dispositif selon la revendication 12, **caractérisé en ce que** le dispositif de commande et de réglage (24) est lié à un frein continu exempt d'usure (23) pour le freinage d'arbres d'entraînement du véhicule (18) par l'intermédiaire d'une ligne de commande (28).

18. Dispositif selon la revendication 12, **caractérisé en ce que** le dispositif de commande et de réglage (24) est lié aux freins de service (21, 22) des roues motrices du véhicule (19, 20) par l'intermédiaire de lignes de commande (28, 29).

19. Dispositif selon la revendication 12, **caractérisé en ce que** le dispositif de commande et de réglage (24) est lié à un dispositif de réglage du régime, de préférence à un élément actionneur de puissance du moteur à combustion interne (1) du véhicule, par l'intermédiaire d'une ligne de commande (25).
